Europäisches Patentamt

European Patent Office

Office européen des brevets

(19)

(11) Publication number: **0 035 852**
A2

(12) **EUROPEAN PATENT APPLICATION**

(21) Application number: **81300829.9**

(22) Date of filing: **27.02.81**

(51) Int. Cl.³: **B 23 Q 35/10**
**B 29 C 17/14**

(30) Priority: **27.02.80 GB 8006664**

(43) Date of publication of application:
**16.09.81 Bulletin 81/37**

(84) Designated Contracting States:
**AT BE CH DE FR GB IT LI LU NL SE**

(71) Applicant: **J. MacA. King & Co., Limited**
**Excelsior Mills Ripponden**
**Sowerby Bridge, Nr. Halifax West Yorkshire(GB)**

(72) Inventor: **King, James Mac Alistair**
**Lone Tree Farm Hubberton Sowerby Bridge**
**Nr. Halifax West Yorkshire(GB)**

(74) Representative: **Neill, Alastair William**
**Appleyard Lees & Co. 15 Clare Road**
**Halifax West Yorkshire HX1 2HY(GB)**

(54) **Contour cutters.**

(57) A contour cutter comprises an endless flexible blade (22) supported by a frame (10) such that the blade extends around an endless path, the blade being exposed at two locations. Two blocks of material (29,30) can be positioned one at each location, supported by a table (23). The frame (10) can be moved relative to the table (23) according to a predetermined pattern (31) so that the blade (22) cuts from each block (29,30) a piece of material having the same contour as the pattern 31.

FIG.1.

EP 0 035 852 A2

1.

Contour Cutters

The invention relates to contour cutters, i.e. machines operable to cut a block of material e.g. foam plastics into a shape having a desired contour.

The invention provides a contour cutter comprising an endless flexible cutting blade, first support means to support the blade such that the blade extends around an endless path, and means to drive the blade around the endless path, the blade being exposed at at least two separate locations on the path, there being second support means to support a block of material one at each location and there being means to bring about relative movement between the first and second support means according to a predetermined pattern so that the blade simultaneously cuts at least two blocks of material into a shape having a desired contour.

The blade may comprise a wire having an abrasive surface.

Preferably the blade is exposed at at least two opposite sides of the endless path.

Preferably where the blade is exposed at one side of the endless path that part of the path is parallel to that part of the path where the blade is exposed at the opposite side of the path.

The first support means may be mounted on a carriage for pivotal movement about an axis which is

2.

parallel to the said parallel parts of the path, the carriage being movable in a direction which is perpendicular to the said axis and which lies in a plane which is coincident with or parallel to the plane containing the said parts of the path.

Preferably the said axis is horizontal and the carriage is movable in a horizontal plane.

Alternatively, the first support means may be mounted on means which enable the blade to be moved upwardly and downwardly with the plane containing the said path remaining horizontal, the second support means being movable to and fro in a horizontal plane.

The first support means may be mounted for vertical movement on one or more guide pillars.

By way of example, specific embodiments of the invention will now be described, with reference to the accompanying drawings, in which:

Figure 1 is a plan view of a first embodiment of contour cutter according to the invention;

Figure 2 is an end view of the embodiment shown in Figure 1;

Figure 3 is a plan view of an alternative embodiment of contour cutter according to the invention; and

Figure 4 is an end view of the contour cutter shown in Figure 3.

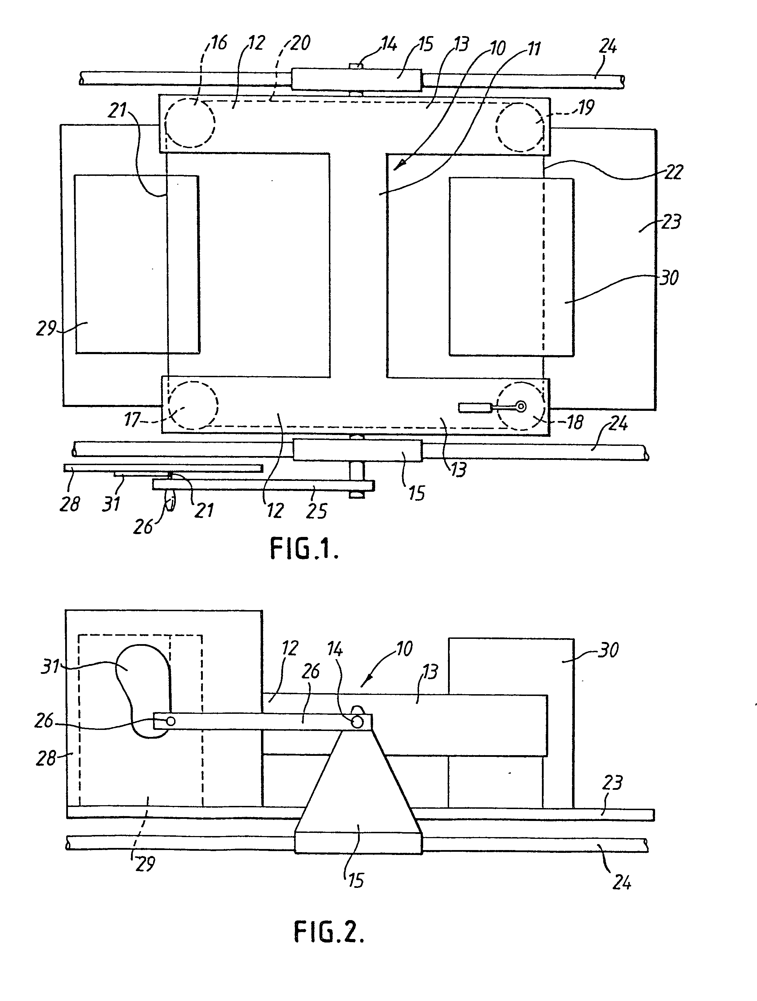

The embodiment of contour cutter shown in Figures 1 and 2 comprises first support means in the form of an H-shaped frame 10 having a central portion 11 from which projects a first pair of arms 12 and a second pair of arms 13.

The frame is made up of hollow box sections and is supported on a horizontal pivot 14 passing through the

3.

central portion 11. The pivot 14 is mounted on a pair of trunnions 15 arranged one at each end of the frame.

The ends of the arms respectively carry pulley wheels 16, 17, 18 and 19. A blade in the form of a continuous flexible abrasive wire 20 extends around the pulleys. Pulleys 16 and 17 are jockey pulleys. Pulley 18 is adjustable in position to control the tension of the wire and pulley 19 is connected to a drive motor (not visible in the Figure). When the motor is switched on, the blade 20 travels around a generally rectangular endless path defined by the four pulleys.

At the ends of the machine the blade is housed within the arms 12 and 13 but at the two opposite sides of the machine the blade is exposed at 21 and 22.

Underneath the frame 10 there is second support means in the form of a rigid support table 23.

At each end of the machine there is a horizontally extending support rail 24 and the trunnions 15 are mounted for horizontal sliding movement on these rails 24.

The pivot 14 is rotatable in the trunnions 15 but is regidly secured to the frame 10. At one end of the pivot 14 there is rigidly secured a lever 25 and at the free end of this lever 25 there is a handle 26. The axis of the handle 26 is colinear with the portion 21 of the blade 20 and also colinear with the portion 21 of the blade 20 is a peg 27 which projects from the lever 25 on the opposite side of the lever from the handle 26.

A pattern support 28 is mounted in a vertical plane between the lever 25 and the adjacent rail 24.

In use a first block of plastics foam 29 is secured on the table 23 in the vicinity of the blade portion 21

4.

and a second block of plastics foam 30 is secured in position on the table 23 in the vicinity of the blade portion 22. A pattern 31 having a contour which it is desired to reproduce on the blocks is secured to the pattern support 28. The motor driving the blade is then switched on and the handle 26 is used to move the projecting peg 27 around the contour of the pattern 31. The blade portion 21 thus follows a contour corresponding to that of the pattern 31, cutting the block 29 to the desired contour. Vertical movement of the portion 21 is catered for by pivoting of the frame 10 and horizontal movement is catered for by movement of the frame 10 on the rails 23, via the trunnions 15.

Although only one pattern 31 is used, because of the fact that the blade 20 is also exposed at 22, and the second block of foam 30 is placed on the table 23, the blade portion 22 cuts the block 30 into an identical contour. When the blade portion 21 makes downward movements, the blade portion 22 makes upward movements, but nevertheless an identical contour is achieved.

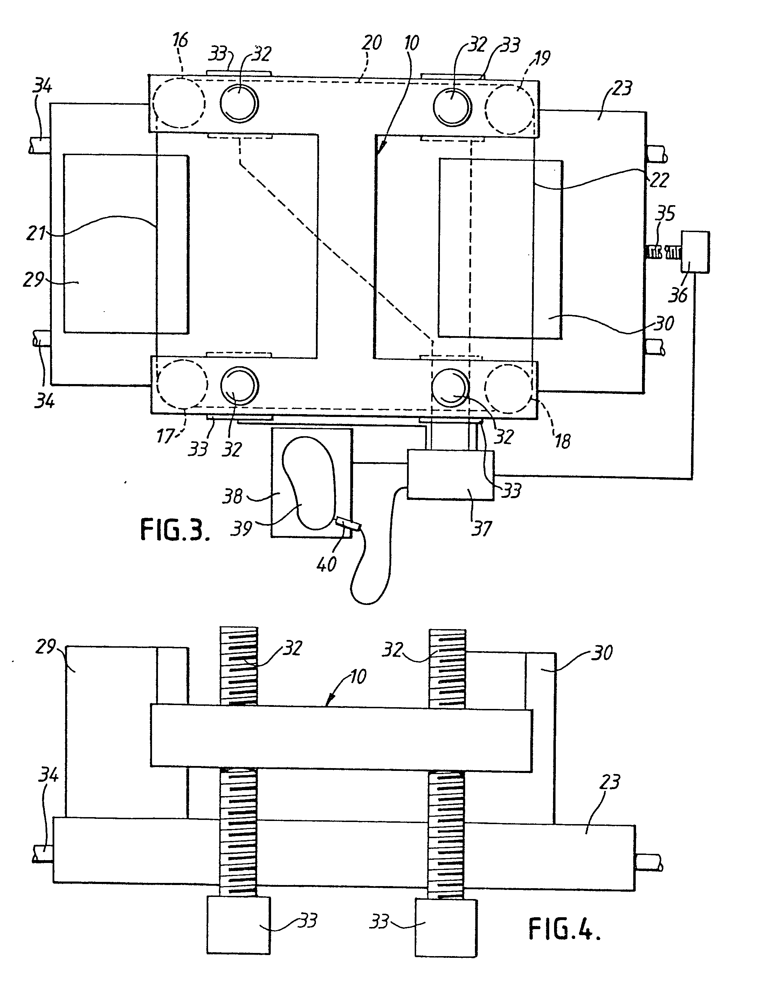

Turning now to the embodiment shown in Figures 3 and 4, there is a similar frame 10 supporting a blade 20 on pulleys 16, 17, 18 and 19. However instead of being pivotally mounted, the frame 10 is supported for vertical movement while remaining in a horizontal plane by means of four support pillars 32. Each pillar 32 is screw-threaded and passes through a fixed nut in the frame 10. Each pillar is mounted on a plinth 33 which contains a stepping motor operable to rotate the pillar. Rotation of the pillars in one direction causes the frame 10 to rise and rotation in the opposite direction causes the frame to descend.

5.

As in the first embodiment, a support table 23 is positioned underneath the blade portions 21 and 22 but the support table is mounted for horizontal movement on rails 34. A screw-threaded shaft 35 engages in a fixed nut in the table 23 and the shaft 35 is rotatable by a stepping motor 36.

The motor 36, and the motors controlling the pillars 32, are connected to a microprocessor 37. The microprocessor is also connected to a pattern support 38 which carries a pattern 39, and to a pattern scanner 40.

It will be seen that because the frame 10 is vertically adjustable and the table 23 is horizontally adjustable, relative movement between the frame 10 and table 23 can be brought about to cause the blade portions 21 and 22 to perform identical cutting movements according to any desired pattern, when plastics foam blocks similar to blocks 29 and 30 are placed in position.

Any desired pattern 39 may be placed on the pattern support 38 and the contour of the pattern is then followed by the pattern follower 40. The microprocessor 37 receives information about the movements of the pattern follower 40 and controls the stepping motors to bring about corresponding movements of the blade portions 21 and 22 with respect to the foam blocks secured on the table 23.

Because the embodiments described above utilise the cutting blade to perform cutting operations at two separate locations, the contour cutters have twice the output capability of known machines.

The invention is not restricted to the details of the foregoing embodiments. For instance any combination of movements of the support frame and/or support table may be used to bring about the desired relative movement

6.

between the blade and the blocks which are to be cut.
For instance in the embodiment shown in Figures 3 and 4,
the table 23 may be stationary and the frame 10 may be
arranged for horizontal movement as well as vertical
movement.

The important feature of the invention is that
the blade is used to perform a cutting operation at at
least two different locations, thus at least doubling
the output of the cutter. The means which are utilised
to enable the blade to follow a desired cutting contour
is not important and any desired means may be utilised.

7.

## Claims

1. A contour cutter comprising an endless flexible blade (22), first support means (10) to support the blade such that the blade extends around an endless path, and means to drive the blade (22) around the endless path, characterised in that the blade (22) is exposed at at least two separate locations on the path, there are second support means (23) to support a block of material one at each location, and there are means (25, 26) to bring about relative movement between the first (10) and second support means (23) according to a predetermined pattern (31) so that the blade (22) simultaneously cuts at least two blocks of material into a shape having a desired contour.

2. A contour cutter as claimed in Claim 1, in which the blade (22) comprises a wire having an abrasive surface.

3. A contour cutter as claimed in Claim 1 or Claim 2, in which the blade (22) is exposed at at least two opposite sides of the endless path.

4. A contour cutter as claimed in Claim 3, in which, where the blade (22) is exposed at one side of the endless path that part of the path is parallel to that part of the path where the blade (22) is exposed at the opposite side of the path.

5. A contour cutter as claimed in Claim 4, in which the first support means (10) is mounted on a carriage (15) for pivotal movement about an axis (14) which is parallel to the

8.

said parallel parts of the path, the carriage (15) being
movable in a direction which is perpendicular to the
said axis (14) and which lies in a plane which is
coincident with or parallel to the plane containing
the said parts of the path.

6.  A contour cutter as claimed in Claim 5, in which the
said axis (14) is horizontal and the carriage (15) is
movable in a horizontal plane.

7.  A contour cutter as claimed in any one of Claims 1 to 4,
in which the first support means (10) is mounted on means
(32) which enable the blade to be moved upwardly and
downwardly with the plane containing the said path remaining
horizontal, the second support means (23) being movable
to and fro in a horizontal plane.

8.  A contour cutter as claimed in Claim 7, in which the
first support means (10) is mounted for vertical movement
on one or more guide pillars (32).

1/2

FIG.1.

FIG.2.

2/2

FIG.3.

FIG.4.